# EUROPÄISCHE PATENTSCHRIFT

(11) **EP 1 095 833 B1**
(45) Veröffentlichungstag und Bekanntmachung des Hinweises auf die Patenterteilung: **20.08.2003**
(21) Anmeldenummer: 00110397.7
(22) Anmeldetag: 16.05.2000
(51) Int. Cl.: B60T 7/22, B60K 31/00

(54) **Verfahren zur automatischen Abstandsregelung von Fahrzeugen**
Method for automatic control of vehicle spacing
Procédé pour la régulation automatique de la distance entre véhicules

(30) Priorität: 26.10.1999 DE 19951423
(43) Veröffentlichungstag der Anmeldung: 02.05.2001
(73) Patentinhaber: WABCO GmbH & CO. OHG, 30453 Hannover (DE)
(72) Erfinder: Dieckmann, Thomas, Dr., 30982 Pattensen (DE)
(74) Vertreter: Schrödter, Manfred

(56) Entgegenhaltungen:
- DE-A- 4 437 678
- DE-C- 19 744 112
- HIPP E ET AL: "INTELLIGENTE FAHRER- UNTERSTUETZUNG: DER ABSTANDSGEREGELTE TEMPOMAT" INTERNATIONALES VERKEHRSWESEN,DE,TETZLAFF VERLAG, DARMSTADT, Bd. 49, Nr. 7/08, 1. Juli 1997 (1997-07-01), Seiten 403-407, XP000724196 ISSN: 0020-9511

## Beschreibung

Die Erfindung betrifft ein Verfahren zur automatischen Abstandsregelung zwischen einem zu regelnden Fahrzeug und einem weiteren Fahrzeug gemäß dem Oberbegriff des Patentanspruchs 1.

Ein gattungsgemäßes Verfahren ist aus der DE 44 37 678 A1 bekannt.

Bei dem bekannten Verfahren zur automatischen Abstandsregelung ist eine Abstandsregeleinrichtung vorgesehen, die infolge von mittels einer Meßeinrichtung gewonnenen Abstandsinformationen zu einem vorausfahrenden Fahrzeug durch automatische Veränderung der Geschwindigkeit des zu regelnden Fahrzeugs den Abstand zu dem vorausfahrenden Fahrzeug nach vorgegebenen Algorithmen einstellt. Die Anpassung der Geschwindigkeit kann durch Eingriffe der Abstandsregeleinrichtung in die Bremsanlage oder in die Motorsteuerung erfolgen.

Aus der DE 197 44 112 C1 ist eine Fahrzeugbremsanlage eines Kraftfahrzeuges bekannt, bei der ein elektronisch steuerbarer Bremskraftverstärker vorgesehen ist. Durch geeignete Steuerung des Bremskraftverstärkers können Lüftspiel, Leerweg und toleranzbedingte Totwege in dem Hauptbremszylinder oder anderen Teile der Bremsanlage vermindert werden, wodurch ein schnelleres Ansprechen der Bremsen im Fall einer nachfolgend durchgeführten Bremsung ermöglicht wird. In einer speziellen Ausführungsform ist dort vorgesehen, daß eine derartige Fahrzeugbremsanlage mit Abstandsregelungen und Geschwindigkeitsregelungen oder mit Kombinationen davon kombiniert werden kann.

Bei der Abstandsregelung ist, wie im Grunde bei jeder Regelung, eine möglichst hohe Regelgüte erwünscht. Hierunter versteht man ein eine möglichst schnelle Kompensation von Regelabweichungen mit möglichst geringen Überschwingvorgängen.

Der Erfindung liegt daher die Aufgabe zugrunde, ein Verfahren zur automatischen Abstandsregelung zwischen einem zu regelnden und einem weiteren Fahrzeug anzugeben, mit dem eine im Vergleich zu bekannten Verfahren verbesserte Regelgüte mit einfachen Mitteln erreicht wird.

Diese Aufgabe wird durch die in dem Patentanspruch 1 angegebene Erfindung gelöst. Weiterbildungen und vorteilhafte Ausgestaltungen der Erfindung sind in den Unteransprüchen angegeben.

Ein Vorteil der Erfindung ist, daß die Auswirkung von Ansprechtotzeiten mechanischer Übertragungsglieder in der Bremsanlage auf die Abstandsregelung minimiert wird. So ergeben sich beispielsweise bei einer Bremsanlage konventioneller Bauart mit Reibungsbremsen dadurch Ansprechtotzeiten, daß bei einer Bremsbetätigung die Bremszylinder zunächst einen Totweg überwinden müssen, welcher auch als Lüftspiel bezeichnet wird. Im Bereich dieses Totwegs erfolgt noch keine Abbremsung des Fahrzeugs. Durch Anwendung der Erfindung kann eine hohe Regelgüte erzielt werden.

Die Erfindung hat den weiteren Vorteil, daß sie sehr kostengünstig durch einfache Anpassung von Steuerprogrammen der Abstandsregeleinrichtung und einer die Bremsanlage steuernden Einrichtung realisiert werden kann. Eine teure und aufwendige Optimierung der Übertragungsmechanik der Motorsteuerung oder der Bremsanlage zur Verringerung von Totzeiten ist nicht erforderlich.

Ein weiterer Vorteil der Erfindung ist, daß die Regelamplituden der Abstandsregeleinrichtung geringer ausfallen können und das Regelverhalten somit harmonischer erscheint, was den Fahrkomfort erhöht. Die Verringerung der Regelamplituden bewirkt zudem auch eine Verringerung des Kraftstoffverbrauchs. Zudem wird die sogenannte Kolonnenstabilität von Fahrzeugen bei Anwendung des erfindungsgemäßen Verfahrens wesentlich verbessert. Unter Kolonnenstabilität versteht man in diesem Zusammenhang die Vermeidung von Aufschwingvorgängen bei der Abstandsregelung zwischen einer Vielzahl von in einer Kolonne fahrenden, automatisch abstandsgeregelten Fahrzeugen.

Gemäß der Erfindung sendet die Abstandsregeleinrichtung das Bremsbereitschaftssignal an die Bremsanlage, wenn aufgrund der Umfeldsituation eine Bremsung in Kürze zu erwarten ist. Unter der Umfeldsituation ist in diesem Zusammenhang die Erkennung bestimmter charakteristischer Verkehrssituationen und Fahrverhaltensmuster zu verstehen. Als Umfeldsituationen, in denen in einer bevorzugten Ausgestaltung der Erfindung das Bremsbereitschaftssignal generiert wird, sind vorzugsweise zu nennen:
- Ein auf einer benachbarten Fahrspur befindliches Fahrzeug tendiert dazu, auf die Fahrspur des zu regelnden Fahrzeugs einzuscheren.
- Eines oder mehrere Fahrzeuge auf der links gelegenen benachbarten Fahrspur verzögern oder fahren langsamer als das zu regelnde Fahrzeug.
- Ein auf der gleichen Fahrspur vorausfahrendes Fahrzeug verzögert geringfügig, so daß eine Anpassung des Abstands bei dem zu regelnden Fahrzeug durch eine Reduzierung der Motorleistung ohne Bremsbetätigung möglich ist.
- Ein Fahrzeug, das vor dem auf der gleichen Fahrspur vorausfahrenden Fahrzeug fährt, verzögert.
- Der vorausliegende Fahrbahnverlauf deutet auf einen Bremsbedarf hin, z. B. bei einer relativ engen Kurve oder einer Autobahnabfahrt. Der vorausliegende Fahrbahnverlauf kann hierbei unter Verwendung einer in digitaler Form vorliegenden Straßenkarte in Verbindung mit einer Einrichtung zur Ermittlung der Fahrzeugkoordinaten, z. B. einem GPS-Empfänger (GPS = Global Positioning System) festgestellt werden.

Allgemeiner gesagt sind unter einer Umfeldsituation, in der in Kürze eine Bremsung zu erwarten ist, alle von einem erfahrenen Fahrzeugführer geläufigen Verkehrssituationen zu verstehen, bei denen er eine erhöhte Bremsbereitschaft einnimmt, wie z. B. in einigen oder allen der zuvor genannten Fälle bzw. weiteren Situationen.

Situationen der zuvor erwähnten Art können ergänzend auch durch eine Auswertung optischer Signale, z. B. mittels einer in dem zu regelnden Fahrzeug angeordneten Bilderfassungseinrichtung, erkannt werden. So kann ein Fahrspurwechsel eines auf einer benachbarten Fahrspur befindlichen Fahrzeuges durch Erkennung des Blinksignals des Fahrtrichtungsgebers erkannt werden. Eine Verzögerung eines vorausfahrenden Fahrzeuges kann durch Erfassung des Bremslichts erkannt werden.

Die Erfindung wird im folgenden anhand eines Ausführungsbeispiels unter Verwendung von Zeichnungen näher erläutert.

Es zeigen:
- Fig. 1: eine Draufsicht auf eine Kraftfahrstraße mit Fahrzeugverkehr und
- Fig. 2: die für die Erfindung relevanten Komponenten eines zu regelnden Fahrzeuges in schematischer Darstellung und
- Fig. 3 und 4: eine bevorzugte Ausführungsform der Erfindung in Flußdiagrammdarstellung.

In den Figuren werden gleiche Bezugszeichen für einander entsprechende Teile und Signale verwendet.

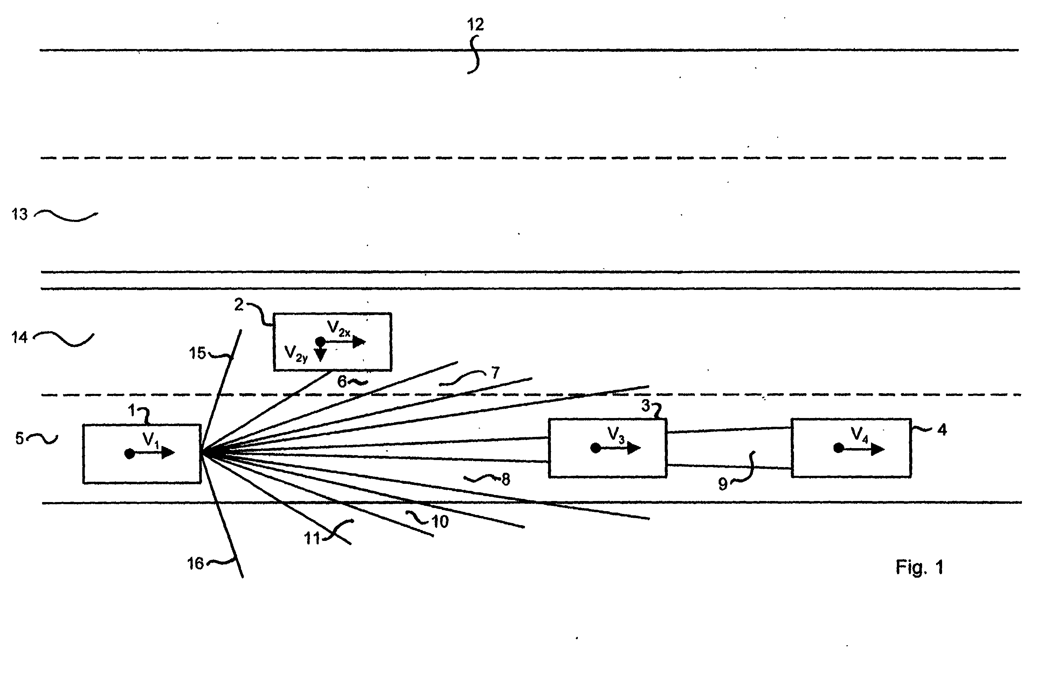

Die Fig. 1 zeigt eine Kraftfahrstraße mit jeweils zwei Fahrspuren (5, 14 bzw. 12, 13) je Fahrtrichtung. Auf der Fahrspur (5) befinden sich drei Fahrzeuge (1, 3, 4), auf der Fahrspur (14) befindet sich ein Fahrzeug (2). Die Fahrzeuge (1, 2, 3, 4) bewegen sich mit Geschwindigkeiten (V₁, V₂, V₃, V₄) in Richtung des auf dem jeweiligen Fahrzeug dargestellten Pfeils. Das Fahrzeug (1) ist das zu regelnde Fahrzeug, welches mit einer Einrichtung zur automatischen Regelung des Abstands zu einem weiteren Fahrzeug ausgestattet ist. Die Abstandsregelung des Fahrzeugs (1) erfolgt gegenüber dem Fahrzeug (3), das dem Fahrzeug (1) auf der Fahrspur (5) vorausfährt. Die zusätzlich dargestellten Fahrzeuge (2, 4) dienen zur Erläuterung bestimmter Umfeldsituationen, bei denen das erfindungsgemäße Bremsbereitschaftssignal erzeugt wird.

Das Fahrzeug (1) weist an seiner Front eine vorzugsweise als Radareinrichtung ausgebildete Abstandserfassungseinrichtung auf, welche Abstandsmeßstrahlen in Fahrtrichtung bzw. in einem gewissen Winkelbereich schräg zur Fahrtrichtung aussendet. Übliche Radareinrichtungen weisen beispielsweise die in der Fig. 1 dargestellten Erfassungsbereiche (6, 7, 8, 9, 10, 11) auf. Gegenstände, die sich in diesen Erfassungsbereichen befinden, lösen Reflexionen des Radarsignals in Richtung auf die Abstandserfassungseinrichtung des Fahrzeugs (1) aus.

Ein Vorteil der Verwendung einer Radareinrichtung als Abstandserfassungseinrichtung ist die Tatsache, daß eine derartige Einrichtung infolge des Doppler-Effekts neben einer Abstandsinformation auch ohne weitere Signalverarbeitungsmaßnahmen, wie z. B. numerische Differentiation und Filterung, bereits eine Geschwindigkeitsinformation zur Verfügung stellt. Der Aufwand zur Erzeugung der für die Ausführung des erfindungsgemäßen Verfahrens erforderlichen Signalverarbeitungsmaßnahmen ist daher dann relativ gering.

Des weiteren ist das Fahrzeug (1) an seiner Front mit einer Bilderfassungseinrichtung, z. B. einer Videokamera, ausgestattet, mittels derer eine Auswertung optischer Informationen in der in dem Fahrzeug (1) angeordneten Abstandsregeleinrichtung möglich ist. Als optische Informationen werden in diesem Zusammenhang vorzugsweise Betätigungen rückwärtiger Signalleuchten der vorausfahrenden Fahrzeuge verstanden, wie z. B. Blinkleuchten und Bremsleuchten. Die Bilderfassungseinrichtung weist in der Darstellung gemäß Fig. 1 einen relativ weiten Erfassungsbereich auf, der in dem von den Linien (15, 16) in Fahrtrichtung umschlossenen Winkelbereich liegt.

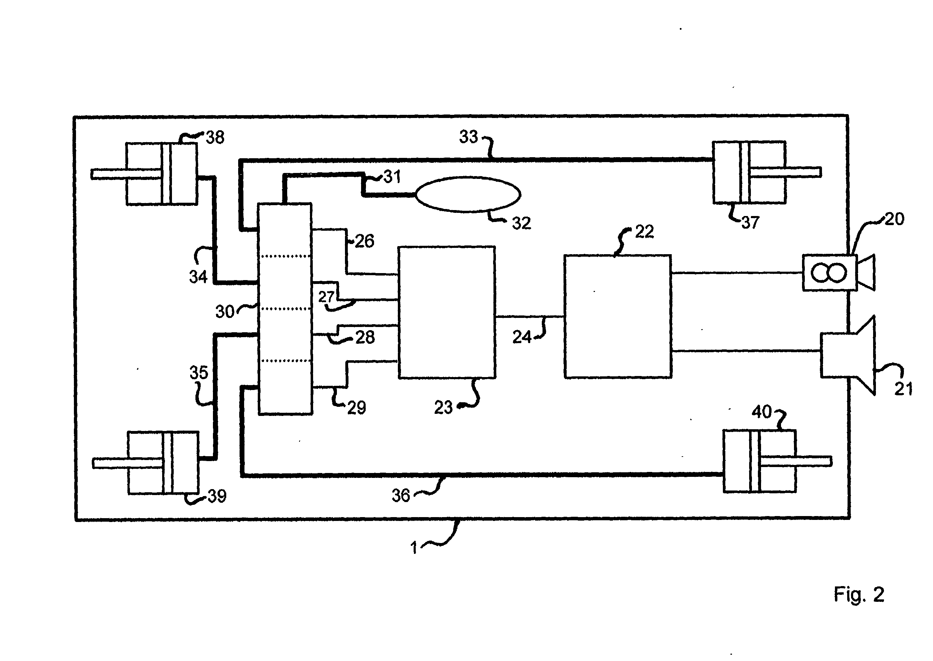

Die Fig. 2 zeigt das Fahrzeug (1) in schematischer Darstellung mitsamt den für die Erfindung relevanten Komponenten. Die Bilderfassungseinrichtung (20) und die Abstandserfassungseinrichtung (21) sind über Leitungen mit der Abstandsregeleinrichtung (22) verbunden. Die vorzugsweise als elektronisches Steuergerät ausgebildete Abstandsregeleinrichtung (22) empfängt ein Bildsignal von der Bilderfassungseinrichtung (20) sowie verschiedene Abstands- und Geschwindigkeitssignale von der Abstandserfassungseinrichtung (21) entsprechend der in den Erfassungsbereichen (6, 7, 8, 9, 10, 11) reflektierten Radarsignale. Durch Auswertung dieser Eingangssignale in einem Steuerprogramm berechnet und beobachtet die Abstandsregeleinrichtung (22) beispielsweise die Abstände zu den Fahrzeugen (2, 3, 4) sowie deren Geschwindigkeiten (V₂, V₃, V₄) in einer dem Fachmann geläufigen Weise. Im Rahmen des Steuerprogramms wird auch das erfindungsgemäße Verfahren gemäß dem nachfolgend beschriebenen Ausführungsbeispiel nach Art von Unterprogrammen ausgeführt.

Des weiteren weist das Fahrzeug eine Bremsanlage, vorzugsweise vom elektrisch steuerbaren Typ, auf, mit einem elektronischen Bremssteuergerät (23), einer über elektrische Leitungen (26, 27, 28, 29) mit dem Bremssteuergerät (23) verbundenen Ventileinrichtung (30), einem mit der Ventileinrichtung (30) über eine Druckmittelleitung (31) verbundenen Druckmittelvorratsbehälter (32) sowie druckmittelbetätigbare Bremszylinder (37, 38, 39, 40), welche über Druckmittelleitungen (33, 34, 35, 36) ihrerseits mit der Ventileinrichtung (30) verbunden sind. Die Bremszylinder (37, 38, 39, 40) sind außerdem in bekannter Weise mit mechanisch betätigbaren Reibungsbremsen verbunden. Die Reibungsbremsen sind zur Vereinfachung in der Fig. 2 nicht dargestellt. Das Bremssteuergerät (23) steuert die Reibungsbremsen in Abhängigkeit von einem Bremswunsch des Fahrers, welcher von einem in der Fig. 2 nicht dargestellten Bremswertgeber erzeugt wird, durch geeignete Zufuhr von Druckmittel von dem Vorratsbehälter (32) in die Bremszylinder (37, 38, 39, 40) mittels geeigneter Betätigungssignale für die Ventileinrichtung (30).

Das Bremssteuergerät (23) ist des weiteren über eine Datenleitung (24) mit der Abstandsregeleinrichtung (22) verbunden. Über die Datenleitung (24) sendet die Abstandsregeleinrichtung (22) bei Bedarf das Bremsbereitschaftssignal oder ein Bremsanforderungssignal oder auch weitere Signale an das Bremssteuergerät (23). Das Bremssteuergerät (23) betätigt infolge der über die Datenleitung (24) empfangenen Signale die Ventileinrichtung (30) derart, daß die von der Abstandsregeleinrichtung (22) angeforderte Bremswirkung erreicht wird. Bei Empfang des Bremsbereitschaftssignals wird der Bremsbereitschaftszustand eingenommen, was im vorliegenden Ausführungsbeispiel bedeutet, daß das Bremssteuergerät (23) den sogenannten Anlegedruck in die Bremszylinder (37, 38, 39, 40) einsteuert, der bewirkt, daß das Lüftspiel der Bremsen überwunden wird und die Bremsbeläge leicht gegen die Bremsscheibe oder Bremstrommel gedrückt werden, ohne daß eine nennenswerte Bremswirkung eintritt.

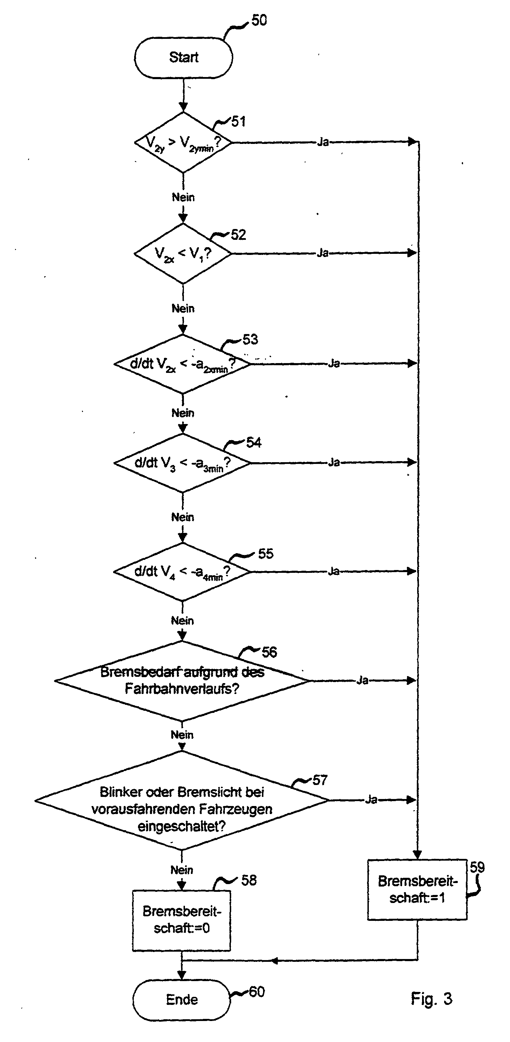

Anhand der Fig. 3 soll eine bevorzugte Ausführungsform der Erzeugung des Bremsbereitschaftssignals erläutert werden. Das Verfahren gemäß Fig. 3 beginnt mit dem Block (50).

Das Verfahren gemäß Fig. 3 ist ein Teil des in der Abstandsregeleinrichtung (22) ausgeführten Steuerprogramms.

In einem Verzweigungsblock (51) wird überprüft, ob sich das auf der benachbarten Fahrspur befindliche Fahrzeug (2) mit einer bestimmten markanten Tendenz in Richtung auf die Fahrspur (5) des zu regelnden Fahrzeugs (1) bewegt. Die Bewegungstendenz wird anhand der Geschwindigkeitskomponente (V_{2Y}) durch Vergleich mit einem Mindestschwellenwert (V_{2Ymin}) ermittelt. Wenn die Geschwindigkeitskomponente (V_{2Y}) den Mindestgeschwindigkeitswert (V_{2Ymin}) überschreitet, so wird dies als Zeichen für ein mögliches Einscheren des Fahrzeugs (2) auf die Fahrspur (5) angesehen und zu dem Zuweisungsblock (59) verzweigt, in dem eine boolesche Variable "Bremsbereitschaft" auf den Wert 1 gesetzt wird.

Anderenfalls wird mit einem weiteren Verzweigungsblock (52) fortgefahren, in dem überprüft wird, ob das Fahrzeug (2) langsamer fährt als das zu regelnde Fahrzeug (1). Hierfür wird die Geschwindigkeitskomponente (V_{2X}) mit der Geschwindigkeit (V₁) verglichen. Wenn die Geschwindigkeitskomponente (V_{2X}) des Fahrzeugs (2) die Geschwindigkeit (V₁) des zu regelnden Fahrzeugs (1) unterschreitet, so wird ebenfalls zu dem bereits erwähnten Zuweisungsblock (59) verzweigt.

Anderenfalls wird mit einem weiteren Verzweigungsblock (53) fortgefahren. Dort wird überprüft, ob das Fahrzeug (2) verzögert. Das Verzögern eines auf einer Überholspur befindlichen Fahrzeuges deutet häufig auf sehr dichten oder stockenden Verkehr hin, so daß ein Bremsbedarf in Kürze auftreten kann. Es wird daher zu dem Zuweisungsblock (59) verzweigt, wenn die Verzögerung (dV_{2X}/dt) des Fahrzeugs (2) einen Mindestverzögerungswert (-a_{2Xmin}) unterschreitet.

Anderenfalls wird mit einem weiteren Verzweigungsblock (54) fortgefahren, wo überprüft wird, ob das Fahrzeug (3) eine geringfügige Verzögerung erfährt. Hierfür wird die Verzögerung (dV₃/dt) des Fahrzeugs (3) mit einem Mindestverzögerungswert (-a₃ₘᵢₙ), welcher einen relativ geringen Zahlenwert aufweist, verglichen und bei Unterschreitung dieses Wertes zu dem Zuweisungsblock (59) verzweigt.

Anderenfalls wird mit einem weiteren Verzweigungsblock (55) fortgefahren, in dem überprüft wird, ob das Fahrzeug (4) verzögert. Hierfür wird in analoger Weise wie in den Blöcken (53, 54) die Verzögerung (dV₄/dt) des Fahrzeugs (4) mit einem hierfür anzuwendenden Mindestverzögerungswert (-a₄ₘᵢₙ) verglichen und bei einer Unterschreitung dieses Wertes zu dem Zuweisungsblock (59) verzweigt.

Anderenfalls wird mit einem weiteren Verzweigungsblock (56) fortgefahren. Dort wird überprüft, ob aufgrund des Fahrbahnverlaufs, welcher mittels einem vorzugsweise in der Abstandsregeleinrichtung (22) angeordneten GPS-Empfänger in Verbindung mit einer vorzugsweise in der Abstandsregeleinrichtung (22) gespeicherten digitalen Straßenkarte ermittelt wird, ein kurzfristiger Bremsbedarf zu erwarten ist. Wenn dies der Fall ist, wird ebenfalls zu dem Zuweisungsblock (59) verzweigt, anderenfalls wird mit einem Verzweigungsblock (57) fortgefahren. Dort wird durch Auswertung des Signals der Bilderfassungseinrichtung überprüft, ob aufgrund eines Blinksignals des Fahrtrichtungsgebers des auf einer benachbarten Fahrspur befindlichen Fahrzeuges (2) ein bevorstehender Fahrspurwechsel dieses Fahrzeuges zu erwarten ist. Des weiteren wird überprüft, ob ein Bremslicht des vorausfahrenden Fahrzeuges (3) auf eine bevorstehende Verzögerung und damit einen Bremsbedarf hindeutet. Wenn wenigstens eine der zuvor genannten Bedingungen erfüllt ist, wird ebenfalls zu dem Zuweisungsblock (59) verzweigt, anderenfalls wird mit dem Zuweisungsblock (58) fortgefahren, in dem die Variable "Bremsbereitschaft" auf den Wert 0 gesetzt wird. Anschließend endet das Verfahren mit dem Block (60).

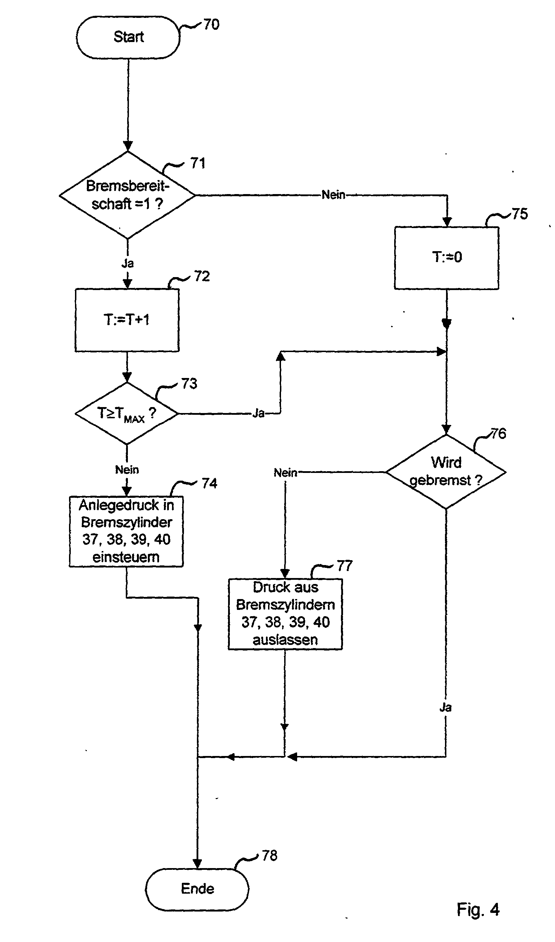

In der Fig. 4 ist eine bevorzugte Ausführungsform der Auswertung des Bremsbereitschaftssignals dargestellt. Das Verfahren gemäß Fig. 4 beginnt mit dem Block (70).

In einem Verzweigungsblock (71) wird überprüft, ob die Variable "Bremsbereitschaft" auf den Wert 1 gesetzt ist. Wenn dies der Fall ist, wird zu einem Block (72) verzweigt, in welchem ein nach dem Einschalten der Abstandsregeleinrichtung (22) auf den Wert Null initialisierter Zeitzähler (T) inkrementiert wird. Der Zeitzähler (T) dient zur Überwachung der Zeit, in der infolge der auf den Wert 1 gesetzten Variable "Bremsbereitschaft" der Bremsbereitschaftszustand eingenommen wird, in welchem das Lüftspiel der Bremsen überwunden wird. In einem darauffolgenden Verzweigungsblock (73) wird überprüft, ob der Zeitzähler (T) eine zur Vermeidung unnötigen Verschleißes oder einer Überhitzung der Bremsbeläge höchstens zulässige Zeitdauer (T_{MAX}) für den Bremsbereitschaftszustand erreicht oder überschritten hat. Wenn dies der Fall ist, wird zu dem im folgenden noch näher erläuterten Verzweigungsblock (76) verzweigt. Anderenfalls wird mit dem Block (74) fortgefahren, in welchem geeignete. Ansteuersignale zur Einsteuerung des Anlegedrucks in die Bremszylinder (37, 38, 39, 40) an die Ventileinrichtung (30) abgegeben werden. Die Bremsanlage befindet sich dann in dem Bremsbereitschaftszustand. Sodann endet das Verfahren mit dem Block (78).

Falls die Variable "Bremsbereitschaft" jedoch nicht den Wert 1 enthält, so wird zunächst zu einem Zuweisungsblock (75) verzweigt, in dem der Zeitzähler (T) auf einen Anfangswert Null zurückgesetzt wird. Sodann wird mit dem weiteren Verzweigungsblock (76) fortgefahren. Dort wird überprüft, ob das Fahrzeug (1) gebremst wird, z. B. durch eine Bremspedalbetätigung des Fahrers. Wenn keine Bremsbetätigung vorliegt, so wird zu einem Block (77) verzweigt, in dem der Druck aus den Bremszylindern (37, 38, 39, 40) herausgelassen wird. Hierdurch soll vermieden werden, daß der in dem Block (74) eingesteuerte Anlegedruck nach Beendigung des Bremsbereitschaftszustandes beibehalten wird, was zu einem unnötigen Verschleiß oder einer Überhitzung der Bremsbeläge führen kann.

## Patentansprüche

1. Verfahren zur automatischen Abstandsregelung zwischen einem zu regelnden Fahrzeug (1) und einem weiteren Fahrzeug (3), wobei das zu regelnde Fahrzeug (1) eine Abstandsregeleinrichtung (22) sowie eine Bremsanlage (23, 26, 27, 28, 29, 30, 31, 32, 33, 34, 35, 36, 37, 38, 39, 40) aufweist, die zur Abbremsung des zu regelnden Fahrzeuges (1) von der Abstandsregeleinrichtung (22) mittels eines Bremseingriffssignals betätigt werden kann, und wobei die Abstandsregeleinrichtung (22) ein Bremsbereitschaftssignal an die Bremsanlage (23, 26, 27, 28, 29, 30, 31, 32, 33, 34, 35, 36, 37, 38, 39, 40) senden kann, welche bei Empfang des Bremsbereitschaftssignals einen Bremsbereitschaftszustand einnimmt, **dadurch gekennzeichnet, daß** die Abstandsregeleinrichtung (22) das Bremsbereitschaftssignal an die Bremsanlage (23, 26, 27, 28, 29, 30, 31, 32, 33, 34, 35, 36, 37, 38, 39, 40) sendet, wenn aufgrund wenigstens einer der nachfolgend genannten Umfeldsituationen eine Bremsung in Kürze zu erwarten ist:
a) ein auf einer benachbarten Fahrspur (14) befindliches Fahrzeug (2) tendiert dazu, auf die Fahrspur (5) des zu regelnden Fahrzeugs (1) einzuscheren,
b) eines oder mehrere Fahrzeuge (2) auf der links gelegenen benachbarten Fahrspur (14) verzögern oder fahren langsamer als das zu regelnde Fahrzeug (1),
c) ein auf der gleichen Fahrspur (5) vorausfahrendes Fahrzeug (3) verzögert geringfügig, derart daß eine Anpassung des Abstands bei dem zu regeinden Fahrzeug (1) durch eine Reduzierung der Motorleistung ohne Bremsbetätigung möglich ist,
d) ein Fahrzeug (4), das vor dem auf der gleichen Fahrspur (5) vorausfahrenden Fahrzeug (3) fährt, verzögert,
e) der vorausliegende Fahrbahnverlauf deutet auf einen Bremsbedarf hin.

2. Verfahren nach Anspruch 1, **dadurch gekennzeichnet, daß** die Bremsanlage (23, 26, 27, 28, 29, 30, 31, 32, 33, 34, 35, 36, 37, 38, 39, 40) Reibungsbremsen aufweist, welche in dem Bremsbereitschaftszustand derart betätigt werden, daß deren Lüftspiel überwunden wird.

3. Verfahren nach einem der vorhergehenden Ansprüche, **dadurch gekennzeichnet, daß** die Bremsanlage (23, 26, 27, 28, 29, 30, 31, 32, 33, 34, 35, 36, 37, 38, 39, 40) druckmittelbetätigbare Bremszylinder (37, 38, 39, 40) aufweist, in welche in dem Bremsbereitschaftszustand der Anlegedruck eingesteuert wird.

4. Verfahren nach einem der vorhergehenden Ansprüche, **dadurch gekennzeichnet, daß** ein Fahrspurwechsel eines auf einer benachbarten Fahrspur (14) befindlichen Fahrzeuges (2) durch Erkennung des Blinksignals des Fahrtrichtungsgebers erkannt wird.

5. Verfahren nach einem der vorhergehenden Ansprüche, **dadurch gekennzeichnet, daß** eine Verzögerung eines vorausfahrenden Fahrzeuges (2, 3, 4) durch Erfassung des Bremslichts erkannt wird.

6. Verfahren nach einem der vorhergehenden Ansprüche, **dadurch gekennzeichnet, daß** der Bremsbereitschaftszustand spätestens nach einer vorgegebenen Zeitdauer (T_{MAX}) beendet wird.

7. Verfahren nach einem der vorhergehenden Ansprüche, **dadurch gekennzeichnet, daß** eine Datenleitung (24) vorgesehen ist, über die ein in der Bremsanlage (23, 26, 27, 28, 29, 30, 31, 32, 33, 34, 35, 36, 37, 38, 39, 40) vorgesehenes Bremssteuergerät (23) mit der Abstandsregeleinrichtung (22) verbunden ist, und daß über die Datenleitung (24) die Abstandsregeleinrichtung (22) bei Bedarf das Bremsbereitschaftssignal an das Bremssteuergerät (23) sendet.

## Claims

1. Method of automatically controlling the distance between a vehicle (1) to be controlled and another vehicle (3), the vehicle (1) to be controlled having a distance control device (22) and having a braking system (23, 26, 27, 28, 29, 30, 31, 32, 33, 34, 35, 36, 37, 38, 39, 40) which, for braking the vehicle (1) to be controlled, can be actuated by the distance control device (22) by means of a brake operation signal, wherein the distance control device (22) can send a braking readiness signal to the braking system (23, 26, 27, 28, 29, 30, 31, 32, 33, 34, 35, 36, 37, 38, 39, 40), which, on receiving the braking readiness signal, assumes a braking readiness condition, **characterised in that** the distance control device (22) sends the braking readiness signal to the braking system (23, 26, 27, 28, 29, 30, 31, 32, 33, 34, 35, 36, 37, 38, 39, 40) when, on the basis of at least one of the circumstances mentioned hereinbelow, braking is to be expected within a short time:
a) a vehicle (2) in a neighbouring lane (14) is tending to move into the lane (5) of the vehicle (1) to be controlled;
b) one or more vehicles (2) in the neighbouring lane (14) located on the left slow down or are moving more slowly than the vehicle (1) to be controlled;
c) a vehicle (3) travelling in front in the same lane (5) slows down slightly such that the distance therefrom of the vehicle (1) to be controlled can be matched thereto by reducing the engine output without brake actuation;
d) a vehicle (4) travelling ahead of the vehicle (3) travelling in front in the same lane (5) slows down;
e) the course of the road ahead indicates a need for braking.

2. Method according to claim 1, **characterised in that** the braking system (23, 26, 27, 28, 29, 30, 31, 32, 33, 34, 35, 36, 37, 38, 39, 40) has friction brakes, which are so actuated in the braking readiness condition that their release clearance is overcome.

3. Method according to one of the preceding claims, **characterised in that** the braking system (23, 26, 27, 28, 29, 30, 31, 32, 33, 34, 35, 36, 37, 38, 39, 40) has pressure-medium-actuatable brake cylinders (37, 38, 39, 40), to which the pressure for abutment is applied in the braking readiness condition.

4. Method according to one of the preceding claims, **characterised in that** a lane change by a vehicle (2) in a neighbouring lane (14) is recognised by recognition of the flashing signal of the direction indicator.

5. Method according to one of the preceding claims, **characterised in that** slowing down by a vehicle (2, 3, 4) travelling in front is recognised by detection of the brake light.

6. Method according to one of the preceding claims, **characterised in that** the braking readiness condition is terminated, at the latest, after a predetermined period of time (T_{MAX}).

7. Method according to one of the preceding claims, **characterised in that** a data line (24) is provided, by way of which a brake control apparatus (23) provided in the braking system (23, 26, 27, 28, 29, 30, 31, 32, 33, 34, 35, 36, 37, 38, 39, 40) is connected to the distance control device (22); and the distance control device (22) sends the braking readiness signal, when required, to the brake control apparatus (23) by way of the data line (24).

## Revendications

1. Procédé de régulation automatique de la distance entre un véhicule à régler (1) et un autre véhicule (3), selon lequel le véhicule à régler (1) comporte un dispositif de régulation de distance (22) ainsi qu'une installation de freinage (23, 26, 27, 28, 29, 30, 31, 32, 33, 34, 35, 36, 37, 38, 39, 40), qui peut être actionnée pour freiner le véhicule à régler (1) par le dispositif de régulation de distance (22) à l'aide d'un signal d'actionnement de freinage, et selon lequel le dispositif de régulation de distance (22) peut envoyer un signal d'état prêt au freinage à l'installation de freinage (23, 26, 27, 28, 29, 30, 31, 32, 33, 34, 35, 36, 37, 38, 39, 40), qui, lors de la réception du signal d'état prêt pour le freinage, passe dans un état prêt pour le freinage, **caractérisé en ce que** le dispositif de régulation de distance (22) envoie le signal d'état prêt pour le freinage à l'installation de freinage (23, 26, 27, 28, 29, 30, 31, 32, 33, 34, 35, 36, 37, 38, 39, 40), lorsqu'il faut s'attendre à courte échéance à un freinage en raison d'au moins l'une des conditions ambiantes indiquées ci-après:
a) un véhicule (2) situé sur une voie de déplacement voisine (14) tend à s'insérer dans la voie de déplacement (5) du véhicule à régler (1),
b) un ou plusieurs véhicules (2) situés sur la voie de déplacement voisine de gauche (14) ralentissent ou se déplacent plus lentement que le véhicule à régler (1),
c) un véhicule précédent (3) dans la même voie de déplacement (5) ralentit légèrement de telle sorte qu'une adaptation de la distance est possible, dans le cas du véhicule à régler (1), au moyen d'une réduction de la puissance du moteur sans actionnement des freins,
d) un véhicule (4), qui se déplace en avant du véhicule précédent sur la même voie de déplacement (5), ralentit,
e) la configuration amont de la voie de déplacement indique le besoin d'un freinage.

2. Procédé selon la revendication 1, **caractérisé en ce que** l'installation de freinage (23, 26, 27, 28, 29, 30, 31, 32, 33, 34, 35, 36, 37, 38, 39, 40) comporte des freins à friction, qui sont actionnés dans l'état prêt pour le freinage de telle sorte que leur interstice d'air est franchi.

3. Procédé selon l'une des revendications précédentes, **caractérisé en ce que** l'installation de freinage (23, 26, 27, 28, 29, 30, 31, 32, 33, 34, 35, 36, 37, 38, 39, 40) comporte des vérins de freinage (37, 38, 39, 40) actionnés par un fluide sous pression et dans lesquels la pression de serrage est commandée dans l'état prêt pour le freinage.

4. Procédé selon l'une des revendications précédentes, **caractérisé en ce qu'**un changement de voie de déplacement d'un véhicule (2) situé sur une voie de déplacement voisine (14) est identifié moyennant l'identification du signal de clignotement de l'indicateur de changement de direction.

5. Procédé selon l'une des revendications précédentes, **caractérisé en ce qu'**une décélération d'un véhicule précédent (2, 4) est identifiée au moyen de la détection du feu stop.

6. Procédé selon l'une des revendications précédentes, **caractérisé en ce que** l'état prêt pour le freinage se termine au plus tard au bout d'un intervalle de temps prédéterminé (T_{MAX}).

7. Procédé selon l'une des revendications précédentes, **caractérisé en ce qu'**il est prévu une ligne (24) de transmission de données, au moyen de laquelle l'appareil de commande de freinage (23) prévu dans l'installation de freinage (23, 26, 27, 28, 29, 30, 31, 32, 33, 34, 35, 36, 37, 38, 39, 40) est relié au dispositif de régulation de distance (22) et que le dispositif de régulation de distance (22) envoie le cas échéant, par l'intermédiaire de la ligne de transmission de données (24), le signal d'état prêt pour le freinage à l'appareil de commande de freinage (23).
